Europäisches Patentamt

European Patent Office

Office européen des brevets

(19)

(11) Veröffentlichungsnummer: **0 164 300**
**A1**

# (12) EUROPÄISCHE PATENTANMELDUNG

(21) Anmeldenummer: 85730069.3

(22) Anmeldetag: 09.05.85

(51) Int. Cl.⁴: **C 04 B 28/04,** C 04 B 41/65
//
(C04B28/04, 14:06, 14:28, 24:26)

(30) Priorität: 09.05.84 DE 3417077

(43) Veröffentlichungstag der Anmeldung: **11.12.85**
**Patentblatt 85/50**

(84) Benannte Vertragsstaaten: **AT BE CH DE FR GB IT LI LU**
**NL SE**

(71) Anmelder: **Tabakoff, Alexander Dipl.-Ing.,**
**Gardeschützenweg 61/63, D-1000 Berlin 45 (DE)**
Anmelder: **Incel, Zeki Dipl.-Ing., Alt-Reinickendorf 10,**
**D-1000 Berlin 51 (DE)**

(72) Erfinder: **Tabakoff, Alexander Dipl.-Ing.,**
**Gardeschützenweg 61/63, D-1000 Berlin 45 (DE)**
Erfinder: **Incel, Zeki Dipl.-Ing., Alt-Reinickendorf 10,**
**D-1000 Berlin 51 (DE)**

(74) Vertreter: **Böning, Manfred, Dr. Ing. et al, Patentanwälte**
**Dipl.-Ing. Dieter Jander Dr. Ing. Manfred Böning**
**Kurfürstendamm 66, D-1000 Berlin 15 (DE)**

(54) **Auch als Modelliermasse nutzbares Material zur Herstellung von dekorativen Gestaltungselementen sowie aus dem Material herrgestellte Fassaden- und Verkleidungselemente.**

(57) Für die Herstellung von dekorativen Gestaltungselementen, insbesondere für die Herstellung von Fassaden,
Skulpturen und Verkleidungsplatten wird ein Material vorgeschlagen, das aus einem Zementanteil und einem Beton-
spachtel-A-Anteil besteht, wobei das Mischungsverhältnis
zwischen dem Zementanteil und dem Betonspachtelanteil
70-90:10-30, vorzugsweise 80:20 beträgt. Dieses Material
kann unmittelbar vor Ort oder aber im Rahmen einer Vorfertigung zu Fassaden- und Verkleidungselementen verarbeitet
werden.

- 1 -

Auch als Modelliermasse nutzbares Material zur
Herstellung von dekorativen Gestaltungselementen
sowie aus dem Material hergestellte Fassaden- und
Verkleidungselemente

Die Erfindung betrifft ein Material zur Herstellung
von dekorativen Gestaltungselementen, insbesondere
für Fassaden, mit einem Anteil von Portland- oder
Weißzement oder einer Mischung dieser Zementsorten
einerseits und einem Anteil von Betonspachtel A
(wäßrige Kunstharzdispersion auf terpolymerer Basis
mit Calcit- und Quarzfüllstoff) andererseits.

Bekannt sind Materialien der vorstehenden Art, bei
denen das Mischungsverhältnis zwischen dem Zementanteil und dem Betonspachtelanteil in der Größenordnung von 20 : 80 liegt. Derartige Materialien
werden als Haftputz auf Wärmedämmplatten verwendet,
wobei der Schichtdicke des Haftputzes zur Vermeidung von Rißbildungen Grenzen gesetzt sind, die bei
etwa 3 - 4 mm liegen. Es ist daher nicht möglich,
mit den bekannten Materialien ohne Zuhilfenahme von
Hartschaumkernen ornamentale Strukturen herzustellen,
deren räumliche Tiefe mehr als 3 - 4 mm beträgt.
Nicht zuletzt aufgrund des Interesses an der Erhaltung bzw. Wiederherstellung geschützter Bauten besteht ein starkes Bedürfnis an einem Material, das
sich leicht verarbeiten läßt und die Möglichkeit
bietet, bei Bedarf auch ohne Hartschaumkerne ornamentale Strukturen weit größerer Tiefe bzw. Dicke
als mit den bekannten Materialien zu realisieren,
d.h. Strukturen, die bisher kernlos lediglich mit
normalem Mörtel bzw. Beton gefertigt werden konnten
und dies nur unter Inkaufnahme der ungünstigen Eigenschaften, insbesondere der unbefriedigenden Oberflächengüte der zuletzt genannten Materialien.

0164300

- 2 -

Der Erfindung liegt die Aufgabe zugrunde, zur Befriedigung des vorgenannten Bedürfnisses ein Material zu schaffen, das ähnlich wie Ton modellierfähig und folglich sogar als Modelliermasse nutzbar ist, und das im abgebundenen Zustand über eine gegenüber dem eingangs genannten Material erhöhte Biegezug- und Druckfestigkeit verfügt. Die der Erfindung zugrunde liegende Aufgabe wird auf überraschend einfache Weise dadurch gelöst, daß das Mischungsverhältnis zwischen dem Zementanteil und dem Betonspachtelanteil 70 - 90 : 10 - 30, vorzugsweise 80 : 20 beträgt.

Zur Beeinflussung der Konsistenz und der Abbindegeschwindigkeit des erfindungsgemässen Materials wird in bekannter Weise Wasser verwendet. Je nach der zu erfüllenden Aufgabe können dem Material Zuschläge in Form von Sand bzw. Sandmehl und/oder leichten Füllstoffen zugesetzt werden, wobei als Füllstoffe z.B. Flugasche und Bims in Betracht kommen.

Es ist selbstverständlich auch möglich, das erfindungsgemässe Material unter Verwendung von Kernen aus Polyurethan- oder Polystyrolschaum zu verarbeiten.

Bei im Zusammenhang mit der Erfindung durchgeführten praktischen Versuchen wurde ein Betonspachtel A der Firma Stotmeister KG. verwendet. Bei diesem Betonspachtel handelt es sich um ein marktgängiges Produkt.

Das erfindungsgemässe Material verfügt nicht nur über eine hohe Biegezug- und Druckfestigkeit, sondern es ist auch wasserabweisend, kratz- und stoßfest, witterungsbeständig und bietet einen guten Haftgrund für Farben und Kunststoffbeschichtungen. Mit

- 3 -

Rücksicht auf die hohe Rißfestigkeit läßt sich das
Material als Modelliermasse zur Herstellung von
Skulpturen verwenden.

0164300

- 4 -

Patentansprüche

1. Material zur Herstellung von dekorativen Gestaltungselementen, insbesondere für Fassaden, mit einem Anteil von Portland- oder Weißzement oder einer Mischung
dieser Zementsorten einerseits und einem Anteil von
Betonspachtel A (wäßrige Kunstharzdispersion auf terpolymerer Basis mit Calcit- und Quarzfüllstoff) andererseits, dadurch gekennzeichnet, daß das Mischungsverhältnis zwischen dem Zementanteil und dem Betonspachtelanteil 70 - 90 : 10 - 30 beträgt.

2. Material nach Anspruch 1, dadurch gekennzeichnet, daß
das Mischungsverhältnis zwischen dem Zementanteil
und dem Betonspachtelanteil 80 : 20 beträgt.

3. Material nach Anspruch 1 oder 2, dadurch gekennzeichnet, daß es einen zur Beeinflussung seiner Konsistenz
dienenden Wasseranteil aufweist.

4. Material nach einem der Ansprüche 1 - 3, dadurch gekennzeichnet, daß es Zuschläge in Form von Sand bzw.
Sandmehl und/oder leichten Füllstoffen aufweist.

5. Dekoratives Fassadenelement bzw. ornamentales Verkleidungselement mit einer aus dem Material gemäß einem
der Ansprüche 1 - 4 hergestellten Außenhülle, dadurch
gekennzeichnet, daß es einen Kern aus Polyurethan-
oder Polystyrolschaum aufweist.

6. Verwendung des Materials nach einem der Ansprüche 1 -
4 als Modelliermasse.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 390 372  (G.E. HARDIN) <br> * Ganzes Dokument * | 1,3,4 | C 04 B  28/04 <br> C 04 B  41/65  // <br> (C 04 B  28/04 <br> C 04 B  14:06 <br> C 04 B  14:28 |
| A | DE-A-2 822 357  (WACKER-CHEMIE GMBH) <br> * Ansprüche 1,2; Seite 6; zweiter Absatz * | 1,2 | C 04 B  24:26  ) |
| A | DE-B-2 814 317  (S. MAIER) <br> * Ansprüche 1,10,11 * | 1,4 | |
| A | CH-A- 572 007  (OLEAG AG) <br><br> * Anspruch I; Beispiel * | | |
| A | FR-A-2 153 617  (LES RAVALEMENTS MODERNES) <br> * Anspruch 1 * | | |

RECHERCHIERTE SACHGEBIETE (Int. Cl.4)

C 04 B  28/00
B 44 C   3/06

Der vorliegende Recherchenbericht wurde für alle Patentansprüche erstellt.

| Recherchenort <br> BERLIN | Abschlußdatum der Recherche <br> 05-08-1985 | Prüfer <br> STROUD J.G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82